(19) Europäisches Patentamt
European Patent Office
Office européen des brevets

(11) EP 2 926 347 B1

(12) **EUROPEAN PATENT SPECIFICATION**

(45) Date of publication and mention of the grant of the patent:
**15.11.2017 Bulletin 2017/46**

(21) Application number: **13798584.2**

(22) Date of filing: **28.11.2013**

(51) Int Cl.:
***H01B 3/44*** *(2006.01)*

(86) International application number:
**PCT/EP2013/003604**

(87) International publication number:
**WO 2014/082750 (05.06.2014 Gazette 2014/23)**

(54) **A CABLE CONSTRUCTION**

KABELKONSTRUKTION

CONSTRUCTION DE CÂBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 EP 12008047**

(43) Date of publication of application:
**07.10.2015 Bulletin 2015/41**

(73) Proprietor: **Borealis AG**
**1220 Vienna (AT)**

(72) Inventors:
- **HJERTBERG, Thomas**
  **S-432 56 Kungshamn (SE)**
- **ANKER, Martin**
  **S-425 43 Hisings Kärra (SE)**
- **SULTAN, Bernt-Åke**
  **S-444 42 Stenungsund (SE)**
- **ALNEGREN, Patrik**
  **413 24 Göteborg (SE)**
- **DAHLÉN, Kristian**
  **S-444 60 Stora Höga (SE)**
- **NYLANDER, Perry**
  **S-412 61 Göteborg (SE)**
- **FAGRELL, Ola**
  **S-444 45 Stenungsund (SE)**

(74) Representative: **Kador & Partner**
**Corneliusstraße 15**
**80469 München (DE)**

(56) References cited:
**EP-A1- 1 512 711**
**WO-A1-2011/041396**
**US-A- 4 447 569**
**US-A- 4 806 425**
**US-A1- 2011 272 174**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The present invention relates to a new cable construction comprising one or more layer elements, which layer elements comprise a first composition, wherein the first composition comprises:

20 to 80 weight percent of a vinyl chloride resin and 1 to 40 weight percent of an epoxidized ester of fatty acids and a monomeric polyol, which epoxidized ester is a compound of formula (**I**),

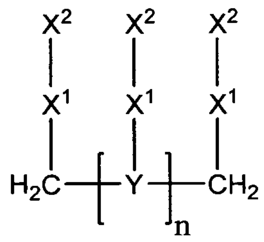

(**I**)

which compound of formula (**I**) has an amount of double bonds corresponding to an Iodine value of 2 or less,
a power cable, a process for producing a cable construction, and
a crosslinked cable construction obtainable by the process.

### Background of the invention

Vinyl chloride polymer compositions, e.g. polyvinyl chloride (PVC) compositions, are well known in the art. Vinyl chloride polymer compositions that do not contain a plasticizer tend to be rigid and may be used for the manufacture of rigid products such as pipe and tubing. Vinyl chloride polymer compositions that include a plasticizer tend to be flexible and may be used in applications such as wire and cable insulation and jacketing, and medical device components.

Efforts have been made to provide flexible vinyl chloride polymer compositions manufactured with other plasticizers as an alternative to the used plasticizers such as phthalate or trimellitate plasticizers.

For example flexible vinyl chloride polymer compositions made with plasticizers that are derived from renewable sources (i.e., biochemical plasticizers) have been provided as an alternative to plasticizers such as phthalate or trimellitate plasticizers.

However, so far vinyl chloride polymer compositions with alternative plasticizers have shown to be inferior in certain aspects in comparison to vinyl chloride polymer compositions made with plasticizers such as phthalate or trimellitate plasticizers.

The alternative plasticizers, e.g. biochemical plasticizers, have hithereto shown to be inferior in utilization in vinyl chloride polymer compositions due to insufficiently compatibility with the vinyl chloride polymer compositions and/or due to poor heat-aging properties.

These disadvantages have limited the use of alternative plasticizers, such as epoxidized soybean oil, to use as primary plasticizers accompanied with a mandatory compatibilizer, see e.g. U.S. Patent Application Publication No. 2011/0272174.

Alternatively, the use of alternative plasticizers have been limited to use as secondary plasticizers, which are present in only small quantities in vinyl chloride polymer compositions based compositions, see e.g. U.S. Patent Application Publication No. 2010/0010127.

Furthermore, in European Patent Application No. 2070977 the steps of partial transesterification of vegetable oils, with ethanol or glycerine, and further acetylation, are also stated as needed to provide alternative plasticizers suitable for use as primary plasticizers in vinyl chloride polymer compositions.

Thus, there is a need for other plasticizers for vinyl chloride polymer compositions with improved properties being useful for cable constructions.

### Description of the Invention

EP 1 512711 relates to a crosslinkable HDPE composition containing ethylene silane copolymers having a silane content of 0.1-10wt% and at least one silanol catalyst. The document further discloses a two layers cable construction.

The present invention relates to a cable construction comprising one or more layer elements, wherein each

layer element, independently, comprises a first composition, wherein the first composition comprises:

20 to 80 weight percent of a vinyl chloride resin and

1 to 40 weight percent of an epoxidized ester of fatty acids and a monomeric polyol, which epoxidized ester is a compound of formula (**I**)

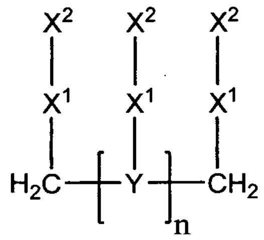

**(I)**

wherein **n** is 0 to 8;
each **Y** is independently selected from CH or CHO;
2, 3 or 4 $\mathbf{X^1}$ are oxy, and any further $\mathbf{X^1}$ is hydrogen;
$\mathbf{X^2}$ is present when $\mathbf{X^1}$ is oxy,
2 or 3 $\mathbf{X^2}$ are independently selected from $C_m$-acyl, wherein each **m** is independently selected from 4 to 28, and any further $\mathbf{X^2}$ is hydrogen;
where (**n** + 2) + (the sum of each **m**) is 45 or more; wherein
the compound of formula (**I**) has an amount of double bonds corresponding to an Iodine value of 2 or less, wherein the cable construction comprises at least one further layer component, which at least one further layer component comprises a second composition comprising a crosslinked polyolefin.

The cable construction according to the present invention include, for example, power cables useful for low voltage (LV), medium voltage (MV), high voltage (HV) and extra high voltage (EHV) applications, or a communication cables, e.g. optical cables, coaxial cables or a paired cables. Further, the cable construction in accordance with the invention includes power cables for alternating current (AC) and/or direct current (DC) applications, e.g. high voltage direct current (HV DC) and extra high voltage direct current (EHV DC) applications.

Moreover, the invention also relates to further examples of cable constructions such as flexible wiring for consumer electronics, power charger wires for cell phones and/or computers, computer data cords, power cords, appliance wiring material, building wire, automotive wire, and consumer electronic accessory cords.

Further, the cable construction comprises one or more layer elements, wherein each layer element, independently, is selected from layers, sheetings, jackets, beddings, insulations, semiconductors, screens and tapes. A screen may be any suitable screen, for example, a conductor screen, a semiconductor screen or an insulation screen.

A jacket is normally defined as an outer layer of the cable construction, e.g. of a power cable. Further, a jacket may itself comprise of one or several jacket materials, which jacket materials may be laminated together.

A sheeting may be any layer in the cable construction, e.g. in a power cable, and a sheeting may also be used as a jacket.

Furthermore, the cable construction also comprises one or more cores. The cores are, usually, the inner and the critical components of a cable construction, such as a cable, and cable cores may, optionally, be made up of one or several conductors, a conductor screens, insulations and insulation screens. Usually, the cable core must contain and maintain the electric field and carry the load current, while effectively dissipating heat from the conductor or conductors.

A conductor may usually be of either copper or aluminum. A conductor screen, e.g. a semiconductive screen, may be extruded over the conductor to smooth out the surface discontinuities and to maintain a uniform electrical field.

The cable construction contains, at least one, insulation which protects the surrounding from the electrical current and field. An insulation screen may be extruded over the insulation to contain the electrical field within the insulation, to maintain a uniformly divergent field and to aid in the removal of capacitive current. The insulation screen may be either strippable or bonded.

Metallic sheaths and concentric neutrals may be applied over the cable core.

Furthermore, the cable construction may comprise tapes, which tapes may have different function depending on the cable construction. For example, the tapes may function as water barrier, semiconductive deformation barrier, shape maintainer, and/or distance element.

The different layer elements may comprise different layer element materials such as, for example, PVC, polyolefins, polyethylenes, crosslinked polyethylenes, polypropylens, Nylon, paper, polyesters, ethylene propylene rubber (EPR) which may be fluorinated, and/or rubber.

The one or more layer elements, comprised in the cable construction of the present invention, comprise the first composition, which first composition comprises 20 to 80 weight percent of a vinyl chloride resin. Further, the first composition may comprise 25 to 80, 30 to 80, 40 to 80, 50 to 80, 20 to 75, 25 to 75, 30 to 80, 30 to 70, 40 to 80, 40 to 70, 40 to 60, 50 to 80, 50 to 70, or, alternatively, 50 to 60 weight percent of a vinyl chloride resin. The term "vinyl chloride resin", as used herein, is a vinyl chloride polymer, such as polyvinyl chloride (PVC), e.g. a polyvinyl chloride homopolymer, or a vinyl chloride copolymer. A commercially available example of a polyvinyl chloride homopolymer is Oxy Vinyls 240F, available from Oxy Vinyls, LP. Further, the vinyl chloride copolymer may have copolymerized units of one or more additional comonomers, which comonomers will typically account for up to 20 weight percent of the copolymer. Examples of suitable comonomers include $C_2$-$C_6$ olefins, for example ethylene and propylene; vinyl esters of straight chain or branched $C_2$-$C_4$ carboxylic acids, such as vinyl acetate, vinyl propionate, and vinyl 2-ethyl hexanoate; vinyl halides, for example vinyl fluoride, vinylidene fluoride or vinylidene chloride; vinyl ethers, such as vinyl methyl ether and butyl vinyl ether; vinyl pyridine; unsaturated acids, for example maleic acid, fumaric acid, methacrylic acid and their mono- or diesters with $C_1$-$C_{10}$ mono- or dialcohols; maleic anhydride, maleic acid imide as well as the N-substitution products of maleic acid imide with aromatic, cycloaliphatic and optionally branched aliphatic substituents; acrylonitrile and styrene. The vinyl chloride copolymer includes, for example, vinyl chloride/vinyl acetate copolymer, vinyl chloride/vinylidene chloride copolymer, or a vinyl chloride/ethylene copolymer.

The "vinyl chloride resin" may also include graft copolymers of vinyl chloride, for example, ethylene copolymers, such as ethylene vinyl acetate, and ethylene copolymer elastomers, such as EPDM (copolymers comprising copolymerized units of ethylene, propylene and dienes) and EPR (copolymers comprising copolymerized units of ethylene and propylene) that are grafted with vinyl chloride.

Further, the "vinyl chloride resin" may also include a polymer blend of the above-mentioned vinyl chloride polymer or vinyl chloride copolymer with other miscible or compatible polymers including, but not limited to, chlorinated polyethylene, thermoplastic polyurethane, olefin polymers such as a methacryl polymer or acrylonitrile-butadiene-styrene polymer (ABS resin).

In further embodiments of the present invention, said first composition comprises 40 to 60 or, alternatively, 40 to 50 weight percent of a vinyl chloride resin.

In still further embodiments of the present invention the vinyl chloride resin is a polyvinyl chloride homopolymer or a vinyl chloride copolymer.

Moreover, the first composition further comprises 1 to 40 weight percent of an epoxidized ester of fatty acids and a monomeric polyol, which epoxidized ester is a compound of formula (**I**), as described herein. The compound of formula (**I**) has the function as a plasticizer for the vinyl chloride resin.

Further, in the compound of formula (**I**) **n** is 0 to 8; and each **Y** is independently selected from CH or CHO.

Thus, for example, when **n** is 1 and **Y** is CH that part of the compound of formula (**I**) will be

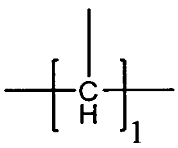

**(Ia)**

and, for example, when **n** is 1 and **Y** is CHO that part of the compound of formula (**I**) will be

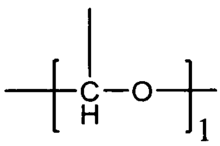

**(Ib)**

In further embodiments of the present invention the first composition comprises 5 to 30, 10 to 40, 10 to 35, 10 to 30, 15 to 30 or, alternatively, 20 to 28 weight percent of the compound of formula (**I**).

In still further embodiments the first composition comprises 10 to 30, 15 to 30 or, alternatively, 20 to 28 weight percent of the compound of formula (**I**).

Furthermore, said first composition may also additionally contain fillers. Particularly useful fillers, as non-limiting examples, include silica, clay, titanium dioxide, talc, calcium carbonate, kaolin clay, and carbon black. Furthermore, the coating composition may additionally contain other compounding ingredients such as thermal- and light-stabilizers, blowing agents, lubricants, pigments, colorants, processing aids, antioxidants, crosslinking agents, flame-retardants,

anti-drip agents, curing agents, boosters and retardants, coupling agents, antistatic agents, nucleating agents, slip agents, viscosity control agents, tackifiers, anti-blocking agents, surfactants, extender oils, acid scavengers, metal deactivators, and the like. The use of such additional components permits the coating composition to be tailored for use in various applications. Particularly useful compounding ingredients include tin, lead, barium/zinc and calcium/zinc thermal stabilizers. If fillers and additives are present, they typically account for no greater than about 15 weight percent of the coating composition, based on the total weight of the coating composition. This includes coating compositions that include no greater than 10 weight percent and no greater than 5 weight percent fillers and additives, based on the total weight of the coating composition.

The epoxidized ester of fatty acids and a monomeric polyol, in accordance with the invention and as described herein, i.e. the compound of formula (**I**), comprises 45 or more carbon atoms, which corresponds to (**n** + 2) + (the sum of each **m**) being 45 or more of compound of formula (**I**).

Note that in accordance with the epoxidized ester of fatty acids and a monomeric polyol, any ester, which is described below, is subsequently epoxidized.

Thus, to arrive at the epoxidized ester of fatty acids and a monomeric polyol, i.e. the compound of formula (**I**), of the present invention, an ester, as described herein, is subsequently epoxidized. Thus, an epoxidation process introduces an atom of oxygen in the double bonds of the fatty acid carbon chains of the ester, forming an oxirane ring. The greater the number of double bonds in the original ester, the greater the number of oxirane rings is achievable.

Thus, the ester may, for example, be a natural oil, such as a vegetable oil or animal fat.

Further, said ester comprises saturated fatty acids, monounsaturated fatty acids and polyunsaturated fatty acids that are esterified to a polyol, for example, butantetrol, glycerol e.g. a glycerol to form a glyceride, typically a di- or triglyceride. The fatty acids typically have chain lengths that contain from about 4 to about 28 carbon atoms, and in further embodiments from about 4 to about 24 carbon atoms, from about 12 to about 28 carbon atoms, or, alternatively, from about 12 to about 24 carbon atoms.

In a further embodiment of the present invention the fatty acids have chain lengths that contain from about 12 to about 24 carbon atoms.

When the ester is a vegetable oil or animal fat. said ester comprises saturated fatty acids, monounsaturated fatty acids and polyunsaturated fatty acids that are esterified to a triglyceride.

Common saturated fatty acids that are present in the natural oils include lauric acid (dodecanoic acid), myristic acid (tetradecanoic acid), palmitic acid (hexadecanoic acid), stearic acid (octadecanoic acid), arachidic acid (eicosanoic acid), and lignoceric acid (tetracosanoic acid).

Common monounsaturated fatty acids include palmitoleic acid (a $C_{16}$-unsaturated acid) and oleic acid (a $C_{18}$-unsaturated acid). Common polyunsaturated fatty acids include linoleic acid (a $C_{18}$-di-unsaturated acid), linolenic acid (a $C_{18}$-tri-unsaturated acid), and arachidonic acid (a $C_{20}$-tetra- unsaturated acid).

Examples of natural oils include plant-based oils (e.g., vegetable oils) and animal fats. Useful natural oil sources include canola oil, tall oil, soybean oil, safflower oil, linseed oil, corn oil, sunflower oil, olive oil, canola oil, sesame oil, cottonseed oil, palm-based oils, rapeseed oil, tung oil, peanut oil, jatropha oil, and combinations thereof. Animal fats may also be used, for example, fish oil, lard, and tallow. The plant-based oils may be natural or genetically modified vegetable oils, for example, high oleic safflower oil, high oleic soybean oil, high oleic canola oil, high oleic peanut oil, high oleic sunflower oil, and high erucic rapeseed oil (crambe oil). Also included are microbial oils, such as algal oil, including those that are genetically modified to increase yields and/or to obtain selective fatty acid distributions.

In a further embodiment of the present invention the compound of formula (I) has an n which is from 0 to 6, 0 to 5, 0 to 4, 0 to 3, 0 to 2, 0 to 1, 1 to 6, 1 to 5, 1 to 4, 1 to 3, or, alternatively, 1 to 2.

In still a further embodiment of the present invention the first composition comprises a compound of formula (**I**) wherein **n** is 1.

In a further embodiment of the present invention the first composition comprises a compound of formula (**I**) wherein each **Y** is CH.

Still a further embodiment of the present invention provides a compound of formula (**I**) wherein 2 or 3 $\mathbf{X^1}$ are oxy.

In a further embodiment of the present invention the first composition comprises a compound of formula (**I**) wherein 2 $\mathbf{X^1}$ are oxy.

Furthermore, said epoxidized ester, i.e. the compound of formula (**I**), may comprise from 45 to 90 carbon atoms, i.e. (**n** + 2) + (the sum of each **m**) may be from 45 to 90.

Furthermore, said epoxidized ester, i.e. the compound of formula (**I**), may comprise from 48 to 87 carbon atoms.

Furthermore, said epoxidized ester, i.e. the compound of formula (**I**), may comprise from 50 to 85 carbon atoms, from 53 to 82 carbon atoms, from 56 to 79 carbon atoms, from 58 to 77 carbon atoms.

A further embodiment of the present invention provides a first composition which comprises a compound of formula (**I**), where (**n** + 2) + (the sum of each **m**) is from 53 to 82 carbon atoms.

An even further embodiment of the present invention provides a first composition which comprises a compound of formula (**I**), where (**n** + 2) + (the sum of each **m**) is from 58 to 77 carbon atoms.

Furthermore, said epoxidized ester, i.e. the compound of formula (**I**), may comprise 9 or more hetero atoms.

Furthermore, said epoxidized ester, i.e. the compound of formula (**I**), may comprise from 9 to 20 hetero atoms, from 9 to 18 hetero atoms, from 10 to 16 hetero atoms, or, alternatively, from 11 to 15 hetero atoms.

In a further embodiment of the present invention a first composition is provided which comprises a compound of formula (**I**), where the compound of formula (**I**) has from 11 to 15 hetero atoms.

In an even further embodiment of the present invention a first composition is provided which comprises a compound of formula (**I**), as described herein, wherein **n** is 0 to 2; 2 $\mathbf{X^1}$ are oxy, 2 $\mathbf{X^2}$ are each independently selected from $C_\mathbf{m}$-acyl, wherein each **m** is independently selected from 4 to 28, and any further $\mathbf{X^2}$ is hydrogen; and where (**n** + 2) + (the sum of each **m**) is from 58 to 77.

Moreover, said epoxidized ester, i.e. the compound of formula (**I**), comprises a relatively high amount of monounsaturated fatty acid/ester relative to the amount of saturated fatty acid/ester and polyunsaturated fatty acid/ester, which renders the compound of formula (**I**) an amount of double bonds corresponding to an Iodine value of 2 or less.

By the term "monounsaturated" it is meant that a fatty acid or fatty acid alkyl ester has one carbon-carbon double bond that is located in the main chain of the fatty acid or fatty ester. Further, by the term "saturated" it is meant that the fatty acid/alkyl ester has a saturated main chain that includes only carbon-carbon single bonds connecting the carbon atoms. Moreover, by the term "polyunsaturated" it is meant that the fatty acid/alkyl ester has a main chain that includes two or more carbon-carbon double bonds.

The epoxidized ester, i.e. the compound of formula (I), has very few double bonds. One way to measure the amount of double bonds in a compound is by measuring the iodine value of the compound. The iodine value for a compound is the amount of iodine that reacts with a sample of the compound, expressed in centigrams iodine ($I_2$) per gram of substance (cg $I_2$/gram). The epoxidized ester, i.e. the compound of formula (**I**), of the present invention has an iodine value of 2 or less.

The high amount of monounsaturated fatty acid/ester may be present in the oil, e.g. the natural oil, itself or it may be obtained by chemical modification of the oil, e.g. the natural oil, such as partial hydrogenation.

Methods for hydrogenation of natural oils are well known in the art and include, for example, contact with hydrogen gas in the presence of a nickel catalyst. During hydrogenation, polyunsaturated fatty acid/alkyl ester species in the starting composition are converted to monounsaturated fatty acids/alkyl esters and some saturated fatty acids/alkyl esters. Preferably, the hydrogenation increases the amount of monounsaturated fatty acids/alkyl esters relative to polyunsaturated fatty acids/alkyl esters, while not substantially increasing the saturated fatty acid/alkyl ester content.

In accordance with the present invention, the compatibility of the epoxidized ester of fatty acids and a monomeric polyol, i.e. the compound of formula (**I**), with the vinyl chloride resin depends on the unsaturation of the epoxidized esters, the level of epoxidation of the double bonds, and the amount of double bonds. The compound of formula (**I**) has an amount of double bonds corresponding to an Iodine value of 2 or less. Thus, the epoxidized ester of fatty acids and a monomeric polyol, i.e. the compound of formula (**I**), of the present invention presents unexpectedly high compatibility with vinyl chloride resins. The high compatibility of the compound of formula (**I**) with vinyl chloride resins is clearly demonstrated in the Examples, see points 4.1 and 4.2 below, where ESO, i.e. the compound of formula (**I**) as described herein, shows significantly lower migration from the PVC sample, i.e. the layer element, than the other tested plasticizers. The migration of ESO, i.e. the compound of formula (**I**), from the PVC sample, i.e. the layer element, is in the order of one fourth of the migration of the other plasticizers.

Further, the present cable construction overcomes certain problems that have prevented various alternative plasticizers, e.g. biochemical plasticizers, from being used as the primary plasticizer in vinyl chloride, such as PVC, resin-based coating compositions of coated conductors. For example, embodiments of the present cable construction provide layer elements, such as layers, sheetings, jackets, beddings, insulations and tapes, which have sufficiently low tensile strengths and sufficiently high tensile elongation at break. Thus, this renders the epoxidized ester of the present invention, i.e. the compound of formula (**I**), suitable for use as primary (or only) plasticizers in applications where flexible vinyl chloride resins are desirable or required. Moreover, the cable construction of the present invention comprises layer elements with the first composition comprising the epoxidized ester, i.e. the compound of formula (**I**), wherein the first composition has maintained or improved heat-aging properties (e.g., improved tensile elongation retention) relative to other earlier described compositions that also include alternative plasticizers, e.g. biochemical plasticizers, as the primary (or only) plasticizers, but where the alternative plasticizer do not have an amount of double bonds corresponding to an Iodine value of 2 or less.

Furthermore, the cable construction of the present invention comprising said one or more layer elements which comprises the first composition comprising the compound of formula (**I**), wherein the first composition provides enhanced plasticizer compatibility relative to compositions that include other alternative plasticizers, e.g. biochemical plasticizers, as the primary (or only) plasticizers, but where the alternative plasticizer do not have an amount of double bonds corresponding to an Iodine value of 2 or less. Moreover, with the cable construction of the present invention comprising said one or more layer elements which comprises the first composition comprising the epoxidized ester of the present invention, i.e. the compound of formula (**I**), there is for the first time provided a cable construction wherein the composition

provides enhanced or maintained plasticizer compatibility, where an alternative plasticizer is used without a compatibilizer.

The plasticizer compatibility is demonstrated in the Examples, see points 4.1 and 4.2 below, or the plasticizer compatibility may also suitable be measured by a loop spew test known to a person skilled in the art.

Thus, in accordance with the present invention the epoxidized ester, i.e. the compound of formula (**I**), makes it possible to provide a cable construction which has an layer element comprising a first composition of a vinyl chloride resin and the compound of formula (I), wherein the layer element exhibits increased flexibility in comparison to a comparable layer element that, instead of the compound of formula (I), comprises a traditional plasticizers, such as phthalate or trimellitate plasticizers, or any hithereto used alternative plasticizer. Thus, the layer element comprising the first composition of a vinyl chloride resin and the epoxidized ester, i.e. the compound of formula (I), which has an amount of double bonds corresponding to an Iodine value of 2 or less, may exhibit improved compatibility relative to a layer element that includes a vinyl chloride resin and a traditional plasticizers, such as phthalate or trimellitate plasticizers, or an hithereto used alternative plasticizer. An improved compatibility of the compound of formula (**I**) with vinyl chloride resins relative to traditional plasticizers with vinyl chloride resin is clearly demonstrated in the Examples, see points 4.1 and 4.2 below, where ESO, i.e. the compound of formula (**I**), shows a significantly lower migration from the vinyl chloride resin.

Furthermore, the use of the unwanted traditional plasticizers, such as phthalate or trimellitate plasticizers, may be avoided.

Furthermore, improved compatibility may also be determined by a loop spew test as described in U.S. Patent Application Publication No. 2011/0272174. Further, the U.S. Patent Application Publication is hereby incorporated by reference, and in the loop spew test described therein, loop spew is measured in accordance with ASTM D 3291: Standard Test Method for Compatibility of Plasticizers in Poly(vinyl chloride) Plastics Under Compression which determines the compatibility of plasticizers in poly(vinyl chloride) plastics by rating the amount of plasticizer that spews due to compressional stress set up inside a 180° loop bend.

In an embodiment of the present invention, as described herein, the compound of formula (**I**) has an amount of double bonds corresponding to an Iodine value of 1.8 or less.

In a further embodiment of the present invention, as described herein, the compound of formula (**I**) has an amount of double bonds corresponding to an Iodine value of 1.6 or less.

In still a further embodiment of the present invention, as described herein, the compound of formula (**I**) has an amount of double bonds corresponding to an Iodine value of 1.5 or less.

In even a further embodiment of the present invention, as described herein, the compound of formula (**I**) has an amount of double bonds corresponding to an Iodine value of 1.4 or less.

In a further embodiment of the present invention, as described herein, the compound of formula (**I**) has an amount of double bonds corresponding to an Iodine value of 1.3 or less.

In an embodiment of the present invention, as described herein, the compound of formula (**I**) has an amount of double bonds corresponding to an Iodine value of 1.25 or less.

In even a further embodiment of the present invention a first composition is provided which comprises a compound of formula (**I**), as described herein, wherein the compound of formula (**I**) is an epoxidized soybean oil (ESO) having an amount of double bonds corresponding to an Iodine value as described herein.

In a further embodiment of the present invention a first composition is provided which comprises a compound of formula (**I**), as described herein, wherein the compound of formula (**I**) is an epoxidized soybean oil (ESO) having an amount of double bonds corresponding to an Iodine value of 1.3 or less.

In a further embodiment of the present invention a first composition is provided which comprises a compound of formula (**I**), where the compound of formula (**I**) has an amount of double bonds corresponding to an Iodine value of from 0.1 to 2, 0.1 to 1.8, 0.1 to 1.6, 0.1 to 1.5, 0.3 to 2, 0.3 to 1.8, 0.3 to 1.6, 0.3 to 1.5, 0.5 to 2, 0.5 to 1.8, 0.5 to 1.6, 0.5 to 1.5, 0.1 to 1.75, 0.1 to 1.4, 0.1 to 1.3, 0.1 to 1.25, 0.3 to 1.75, 0.3 to 1.4, 0.3 to 1.3, 0.3 to 1.25, 0.5 to 1.75, 0.5 to 1.4, 0.5 to 1.3, or alternatively, 0.5 to 1.25.

An even further embodiment of the present invention provides a first composition comprising a compound of formula (**I**), where the compound of formula (**I**) has an amount of double bonds corresponding to an Iodine value of from 0.3 to 1.8.

A further embodiment of the present invention provides a compound of formula (**I**), where the compound of formula (**I**) has an amount of double bonds corresponding to an Iodine value of less than 1.75 or, alternatively, less than 1.5.

Still a further embodiment of the present invention provides a compound of formula (**I**), where the compound of formula (**I**) has an oxirane index of 6.5 to 8.5, or, alternatively, an oxirane index of 6.5 to 8.0.

In a further embodiment of the present invention a first composition is provided which comprises a compound of formula (**I**), as described herein, wherein the compound of formula (**I**) comprises an epoxidized ester of fatty acids and a monomeric polyol, wherein said fatty acids comprise 7 to 18 weight percent of saturated fatty acids and 82 to 93 weight percent of unsaturated fatty acids.

In a further embodiment of the present invention a cable construction is provided wherein the first composition comprises a compound of formula (**I**) which is derived from renewable sources.

The use of the plasticizers, being a compound of formula (**I**), has a further advantage relative to more conventional petrochemical-based plasticizers, such as phthalates or trimetallitates, because plasticizers, being a compound of formula (**I**) which is derived from renewable sources, are environmentally friendly.

In a further embodiment of the present invention a cable construction is provided, which cable construction comprises said one or more layer elements and at least one further layer component, which at least one further layer component comprises a second composition comprising a polyolefin, e.g. a polypropylene or polyethylene, wherein said polyolefin, for example, is a crosslinked polyolefin. Examples of crosslinked polyolefins, and of processes for preparing crosslinked polyolefins, may be found in U.S. Pat. No. 3,646,115, U.S. Pat. No. 4,117,195 and EP, A, 0193317, which are all here included by reference.

With a cable construction comprising layer elements which comprise said first composition, wherein the first composition comprises a vinyl chloride resin and the epoxidized ester, i.e. the compound of formula (**I**), satisfactory mechanical properties of the "at least one" further layer component comprising the second composition comprising a polyolefin, i.e. a crosslinked polyolefin, for example, a polypropylene or polyethylene , may be maintained after aging of the cable construction, which is not always the case with cable constructions combining a vinyl chloride resin with traditional plasticizers, such as phthalate or trimellitate plasticizers, and a polyolefin layer component. Problems with cable constructions in relation to the mechanical properties of a polyolefin layer component, such as an insulation, after aging of the cable constructions according to a standard test have been experienced with cable constructions where polyvinyl chloride materials, with traditional plasticizers, are used as coating.

It may be shown that the migration of the epoxidized ester, i.e. the compound of formula (**I**), from the vinyl chloride resin to the polyolefin layer component is significantly less in comparison to the corresponding migration with a traditional plasticizers, such as phthalate or trimellitate plasticizers, from a vinyl chloride resin to a polyolefin layer component. This is also clearly demonstrated in the Examples, see points 4.1 and 4.2 below, where ESO, i.e. the compound of formula (**I**), shows a significantly lower migration from the vinyl chloride resin.

Moreover, with the cable construction comprising layer elements which comprise said first composition, wherein the first composition comprises a vinyl chloride resin and the epoxidized ester, i.e. the compound of formula (**I**), and the at least one further layer component comprising a second composition, cable constructions is provided which comprise a vinyl chloride resin with a plasticizer and a further layer component comprising a second composition comprising a polyolefin, wherein the further layer component has maintained satisfactory mechanical properties. This is also clearly demonstrated in the Examples, see points 5.1, 5.2 and 5.3 below, where the Inventive example 1, i.e. 5.3, 3 exhibits maintained satisfactory mechanical properties.

Thus, with the cable construction comprising layer elements which comprise said first composition, wherein the first composition comprises a vinyl chloride resin and the epoxidized ester, i.e. the compound of formula (**I**), and the at least one further layer component comprising a second composition, cable constructions may be provided:

which comprise a vinyl chloride resin with a plasticizer and a further layer component comprising a second composition comprising a polyolefin, wherein the further layer component has maintained satisfactory mechanical properties (demonstrated in the Examples, see points 5.1, 5.2 and 5.3 below, as already described above),

which comprise layer elements of a first composition of a vinyl chloride resin with a plasticizer, wherein the plasticizer has improved vinyl chloride resin compatibility (demonstrated in the Examples, see points 4.1 and 4.2 below, as already described above), and/or

wherein the use of the unwanted traditional plasticizers, such as phthalate or trimellitate plasticizers, may be avoided.

The cable construction comprises the "at least one further layer component comprising a second composition", wherein each layer component is independently selected from a sheeting, a layer and a bedding.

According to the present invention a cable construction is provided, wherein the cable construction comprises said one or more layer elements and at least one further layer component, which at least one further layer component comprises a second composition comprising a crosslinked polyolefin. Moreover, the polyolefin may, for example, be a polypropylene or polyethylene.

Further, the polyolefin may be a homopolymer or a copolymer of an olefin, such as a homopolymer and copolymer ethylene. The polyolefin is preferably selected from a crosslinked polypropylene or a crosslinked polyethylene.

A further embodiment of the present invention provides a cable construction, wherein the cable construction comprises at least one further layer component, which at least one further layer component comprises a second composition comprising a crosslinked polyethylene.

In a further embodiment of the present invention a cable construction is provided, wherein the cable construction is a power cable.

A further embodiment of the present invention relates to a process for producing a cable construction, as

described herein, whereby the process comprises the step of applying, one or more layer elements, on one or more cores, wherein the layer elements comprise the first composition, as described herein, and wherein the "one or more cores" are as described herein.

The step of applying, one or more layer elements, on one or more cores, means applying, one or more layer elements, directly or indirectly, on one or more cores.

The "one or more layer elements" may be applied on the "one or more cores" by, for example, extrusion or coextrusion.

An even further embodiment of the present invention provides said process, whereby the process comprises the step of applying on one or more cores at least one further layer component, wherein said at least one further layer component is as defined herein.

The "at least one further layer component" may be applied on the "one or more cores" by, for example, extrusion or coextrusion.

Still a further embodiment of the present invention provides the process, as described herein, for producing a crosslinked cable construction, wherein the process comprises a further step of

- crosslinking the applied at least one further layer component, wherein said at least one further layer component comprises a second composition comprising a polyolefin bearing hydrolysable silane group(s) containing units, as defined herein, or a polyethylene bearing hydrolysable silane group(s) containing units, as defined herein. Said at least one further layer component comprises a second composition which is crosslinked in the presence of a silanol condensation catalyst and water.

The cable construction, in accordance with the present invention, can, for example, be prepared in processes including various types of extruders, e.g., single or twin screw types. A description of a conventional extruder can be found in U.S. Pat. No. 4,857,600. An example of co-extrusion and an extruder can be found in U.S. Pat. No. 5,575,965.

Still a further embodiment of the present invention provides a crosslinked cable construction obtainable by the process as described herein.

## Brief description of the Figures

Fig 1 describes how the circular polyethylene materials (PE, i.e. PE1-PE6) plaques ("further layer components comprising second compositions") is placed between two PVC plaques ("layer elements"), which is placed between two sheets of glass.

Fig 2 illustrates the absorption of DEHP, DINP, DIDP and ESO in PE samples, here PE1 samples, ("further layer components") as a function of time at 93°C.

## Examples

### 1. Compatibility and Migration example

### 1.1 Materials

#### 1.1.1 "Further layer component comprising a second composition", here polyethylene materials

Ten different "further layer components (comprising a second compositions)", which comprises a polyolefin, here polyethylene materials, i.e. PE1 (crosslinked ethylene vinyl silane copolymer), PE2 (crosslinked ethylene vinyl silane copolymer), PE3 (crosslinked ethylene vinyl silane copolymer), PE4 (crosslinked ethylene vinyl silane copolymer), PE5 (crosslinked ethylene vinyl silane copolymer) and PE6 (a linear low density polyethylene base resin for grafting), with different properties were tested as listed in table 1 below. The copolymer was vinyl trimethoxy silane (VTMS) and, in one instance, with addition of terpolymer butyl acrylate (BA). The catalyst used were sulphonic acid catalyst masterbatches, i.e. CM1, CM2 and CM3, and a tin based catalyst, i.e. CM4.

Table 1: Information and properties of the different "further layer components (comprising second compositions)", i.e. polyethylene materials used in the test. CM4 contained a content of 1.3% dibutyl tin dilaurate (DBTL).

| **Base resin, i.e. PE materials, grade** | **Density [kg/m$^3$]** | **Copol. VTMS[wt%]** | **Catalyst** |
|---|---|---|---|
| PE1 | 922.5 | 1.35 | CM1 |
| PE2 | 929.0 | 1.35 | CM1 |
| PE1 | 922.5 | | No catalyst |
| PE6 | 920.0 | 1.4 | CM4 |

### 1.1.2 "Layer elements" as described herein, here PVC samples

Four types of "layer elements", here PVC samples (PVC1- PVC4), in the form of 1 mm sheets, were provided from a commercial source, each containing a specific plasticizer, see Table 2. The plasticizers were di-(2-ethyl hexyl) phthalate (DEHP), diisononyl phthalate (DINP), diisodecyl phthalate (DIDP) and epoxidized soybean oil (ESO) (see Illustration 1 below for chemical structures). The chemical structure of ESO may vary so Illustration 1 shows only an example of an ESO molecule. However, the ESO used here (i.e. the ESO listed in Table 2) was an ESO having a viscosity of about 550 mPas, a "volatile organic compounds" (VOC) content that is less than 0.1 percent, an Iodine number which is 1.25 g I / 100 g, i.e. an Iodine value of 1.25, and an oxirane content of 6.7. Such an ESO, i.e. Dehysol® D 82, was commercially available from Cognis, which is a part of BASF. Further, a fifth "layer element", also a PVC sample (PVC5), where the full recipe was not received, was provided from a commercial source and this sample contained DIDP, see Table 2.

Table 2. Recipe of the PVC samples (PVC plaques).

| | **PVC1** | **PVC2** | **PVC3** | **PVC4** |
|---|---|---|---|---|
| PVC, here Norvinyl S7060 [wt%] | 47.8% | 47.8% | 47.8% | 47.8% |
| DEHP, PerstorpOxo [wt%] | 23.9% | 0.0% | 0.0% | 0.0% |
| DINP, Palatinol N [wt%] | 0.0% | 23.9% | 0.0% | 0.0% |
| DIDP, Jayflex DIDP [wt%] | 0.0% | 0.0% | 23.9% | 0.0% |
| ESO, drapex 392 [wt%] | 0.0% | 0.0% | 0.0% | 23.9% |
| stabilizer, Bæropan R8703 KA/5 [wt%] | 1.9% | 1.9% | 1.9% | 1.9% |
| Filling material, Myanit 30-70 [wt%] | 26.3% | 26.3% | 26.3% | 26.3% |
| DIDP, PV203 [wt%] | | | | |
| Bisfenol A [wt%] | | | | |

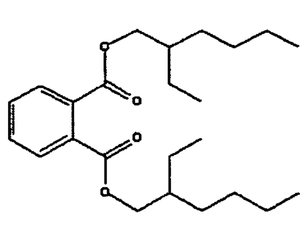

**Di-(2-ethylhexyl) Phthalate (DEHP)**

Molar mass: 390.56

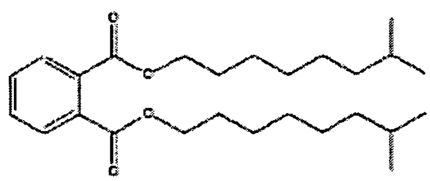

**Diisononyl phthalate (DINP)**

Molar mass: 418.62

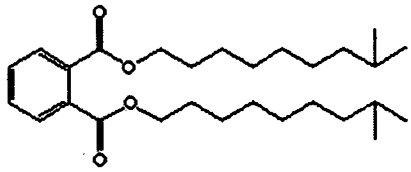

**Diisodecyl phthalate (DIDP)**

Molar mass: 446.67

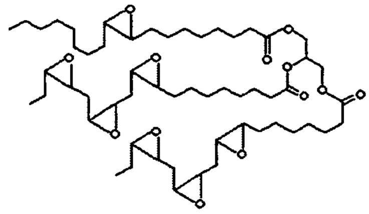

**Epoxidized soybean oil (ESO)**

Molar mass: ~1000

Illustration 1: Chemical structures of the plasticizer used in PVC1-PVC5. The chemical structure of ESO may vary so Illustration 1 shows only an example of an ESO molecule.

**2. Testing procedure and methods**

**2.1. Preparation of "further layer component comprising a second composition", here polyethylene samples**

Both the base resin and the catalyst came in the form of pellets and were dry mixed with a ratio of 95 wt % base resin and 5 wt% catalyst. After mixing, the materials were extruded through a Collin tape extruder with a 1 mm die. The temperature settings on the extruder were, from feed to die, 60°C-150°C-160°C-170°C-170°C for LDPE materials (PE1-PE5). The LLDPE material (PE6) was extruded at temperature settings 60°C-160°C-180°C-220°C-225°C. The resulting tapes were approximately 0.40-0.45 mm thick and were placed and stored in a freezer after extrusion to avoid ambient crosslinking. In the next step the tapes were placed in a 200x200 mm frame and pressed at 180°C and 200-250 bar to a thickness of 0.5 mm. After pressing the resulting plaques were placed in a 90°C water bath for more than 24 hours to ensure complete crosslinking. After crosslinking, circular specimens ("further layer components comprising second compositions") with 50 mm diameter were punched out.

**2.2. Preparation of "layer elements", here polyvinylchloride samples (PVC1-PVC5)**

The sample PVC5 came in the form of pellets and was pressed at 150°C to 1 mm to match the other samples. Circular specimens ("layer elements") with 50 mm in diameter were punched out from all PVC sheets.

**3 Testing and measuring plasticizer migration**

The circular polyethylene materials (PE, i.e. PE1-PE6) plaques ("further layer components comprising second compositions") were placed between two PVC plaques ("layer elements") and a sheet of glass was placed between each PVC-PE-PVC sample (see fig. 1), forming stacks of up to six sample units in each. In some of the samples protective sheets were placed between the PVC and PE specimens. The stacks were stored in ovens, each with a five kilograms weight on them to ensure good contact between the materials. All specimens were weighed before being in contact with each other and being placed in the oven. They were then taken out and were weighed again after a few hours to measure the amount of plasticizer that had migrated over from the PVC specimens ("layer elements") to the PE specimens ("further layer components comprising second compositions"). This was repeated at longer intervals as the test went on as the rate of migration decreased over time. One specific 0.0001 g accuracy scale was used for all measurements. The main part of the experiment was performed in a Heraeus oven set at 100°C but after a while it was discovered that the actual temperature was only averaging at 93°C. Binder ovens were also used for other temperatures. The absorption was calculated according to equation (1).

$$x_{abs} = (m_t - m_{start}) / m_{start} \qquad (1)$$

$x_{abs}$: amount of absorbed plasticizer in massfraction; $m_{start}$: initial mass of the PE sample ("further layer component comprising") ; $m_t$: mass of PE sample after t hours.

The tests were done in three stages. In the first test five identical samples in terms of combination were aged for six days. PE1 ("further layer component") and PVC1 with DEHP were chosen as reference materials. Two specimens of PE1 ("further layer components"), without any contact to PVC, were also placed in the oven. One with two glass sheets protecting it from exposure to air and one without any glass. This test was done to measure the deviation of

plasticizer uptake in the PE specimens ("further layer components") and to see if any mass could be transferred to the PE samples ("further layer components") through air. Since the test showed very low deviation it was decided that the following experiments could be done with single tests.

The absorption of DEHP, DINP, DIDP and ESO in PE1 samples ("further layer components") is illustrated as a function of time at 93°C is illustrated in Fig 2.

In the second test all the constellations of most interest were tested, and in the third test, some follow-up testing from the second test was done and also a few more materials of interest were tested. In the last test some samples were placed in other ovens with other temperatures to test the temperature dependence on migration of plasticizer.

Table 3. The uptake of different plasticizers (wt %) after 300 hour

| | DEHP | DINP | DIDP | ESO |
|---|---|---|---|---|
| PE1 | 8.5 | 9.5 | 10.5 | 2.2 |
| PE1 (not crosslinked) | 9.2 | | | 2.5 |
| PE6 | 8.6 | 9.5 | 9.9 | 1.8 |
| PE2 | 6.5 | | | 1.7 |

### 4. Correlation between migrated amount of plasticizer and mechanical properties of "further layer components comprising second compositions".

#### 4.1 Plasticizer absorption

Firstly, a plasticizer absorption test was performed in the following way. To prepare each of PE1-PE5, a polyethylene, bearing hydrolysable silane group(s) containing units material was dry mixed with 5 weight-% CM1, and then the mixture is extruded to tapes of a thickness of 0.7 mm in a Brabender tape extruder at a temperature setting of 150, 160 and 170°C. The crosslinking reaction starts after the extrusion of the mixture. The tapes were then pressed to plaques of a thickness of 0.5 mm at 180°C. Plaques of a thickness of 0.5 mm of PVC containing diisooctyl phthalate (DIOP), as plasticizer, were also pressed, but at 150°C. Circular specimens with a diameter of 50 g were punched from both of each of PE1-PE5 and the PVC plaques. The specimens were conditioned 23°C and 50 % humidity for 90 hours. The PE1-PE5 specimens ("further layer components") were then placed in a 100°C oven with a PVC specimen ("layer element") on each side of each PE1-PE5 specimen ("further layer component"). The three combined specimens were then placed between two glass plates and pressed together by a load of 5 kg. The combined specimens were weighted before and after every 24 hours during the aging with an accuracy of 0.001 g.

#### 4.2 Influence of plasticizer during ageing

The influence of plasticizer during ageing was measured on plaques that were prepared of tape samples that have extruded on Brabender extruders at temperature setting of 150, 160 and 170°C. Every PE1-PE5 material was dry mixed with 5 weight % CM1 before extrusion. The PE1-PE5 plaques were crosslinked in a 90°C water bath for 16 hours. Also plaques of PVC containing DIOP as plasticizer were pressed at 140°C. The mechanical properties were tested on dumbells made of the PE1-PE5 plaques ("further layer components"). Unaged samples were compared with samples that have been aged with respectively without contact with the PVC plaques. The difference in change in mechanical properties before and after ageing for the different samples describes the influence of the plasticizer on the mechanical properties during ageing.

#### 4.3 Results

1. **Ref example 1:** PE1: crosslinked with 5% CM1 aged without contact with a PVC plaque: Retained elongation at break after aged at 100°C for 7 days is -11%. The weight change of the PE1 plaque was 0 %.

2. **Ref example 2:** PE1: crosslinked with 5% CM1 aged with contact with a PVC plaque containing 30 % DIOP: Retained elongation at break after aged at 100°C for 7 days is -40 %. The weight change of the PE1 plaque was +19 %.

**Inventive example 1:** A plaque of PE1: crosslinked with 5% CM1 aged in direct contact with a PVC plaque

containing 23 % of the ESO as described as used (i.e. the ESO described as "used here" in point 1.1.2 above, and listed in Table 2): Retained elongation at break after aged at 100°C for 7 days is -16%, The weight increase of the PE1 plaque was +3 %.

## Claims

1. A cable construction comprising one or more layer elements, which layer elements comprise a first composition, wherein the first composition comprises:

   20 to 80 weight percent of a vinyl chloride resin and
   1 to 40 weight percent of an epoxidized ester of fatty acids and a monomeric polyol, which epoxidized ester is a compound of formula (I)

   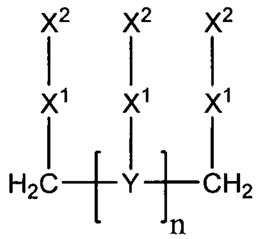

   (I)

   wherein n is 0 to 8;
   each **Y** is independently selected from CH or CHO;
   2, 3 or 4 $\mathbf{X^1}$ are oxy, and any further $\mathbf{X^1}$ is hydrogen;
   $\mathbf{X^2}$ is present when $\mathbf{X^1}$ is oxy,
   2 or 3 $\mathbf{X^2}$ are independently selected from $C_m$-acyl, wherein each m is independently selected from 4 to 28, and any further $\mathbf{X^2}$ is hydrogen; where (**n** + 2) + (the sum of each m) is 45 or more; **characterized by** that the compound of formula (I) has an amount of double bonds corresponding to an Iodine value of 2 or less, wherein the cable construction comprises at least one further layer component, which at least one further layer component comprises a second composition comprising a crosslinked polyolefin.

2. A cable construction according to any of claim 1, wherein **n** is 0 to 2;
   2 $\mathbf{X^1}$ are oxy, 2 $\mathbf{X^2}$ are each independently selected from $C_m$-acyl, wherein each **m** is independently selected from 4 to 28, and any further $X^2$ is hydrogen; and
   where (**n** + 2) + (the sum of each **m**) is from 58 to 77.

3. A cable construction according to any of claim 1 or 2, wherein the compound of formula (I) comprises an epoxidized ester of fatty acids and a monomeric polyol, wherein said fatty acids comprise 7 to 18 weight percent of saturated fatty acids and 82 to 93 weight percent of unsaturated fatty acids.

4. A cable construction according to any of claim 1 to 3, wherein the compound of formula (I) is an epoxidized soybean oil (ESO) having an amount of double bonds corresponding to an Iodine value of 1.3 or less.

5. A cable construction according to any of claims 1 to 4, wherein the compound of formula (I) is derived from renewable sources.

6. A cable construction according to any of claims 1 to 5, wherein the cable construction comprises at least one further layer component, which at least one further layer component comprises a second composition comprising a crosslinked polypropylene or a crosslinked polyethylene.

7. A cable construction according to any of claims 1 to 6, wherein the cable construction comprises at least one further layer component, which at least one further layer component comprises a second composition comprising a crosslinked polyethylene.

8. A cable construction according to any of claims 1 to 7, wherein the cable construction is a power cable.

9. A process for producing a cable construction according to any of claims 1 to 8, whereby the process comprises the step of applying, one or more layer elements, on one or more cores, wherein the layer elements comprise the first composition as defined in any of claims 1 to 5.
applying on one or more cores, at least one further layer component, wherein said at least one further layer component is as defined in any of claims 1 to 8, and
crosslinking the applied at least one further layer component, wherein said at least one further layer component comprises a second composition comprising a polyolefin bearing hydrolysable silane group(s) containing units, e.g. a polypropylene or a polyethylene, both, bearing hydrolysable silane group(s) containing units.

10. A crosslinked cable construction obtainable by the process according to any of claim 9.

**Patentansprüche**

1. Kabelkonstruktion, umfassend ein oder mehrere Schichtelemente, wobei die Schichtelemente eine erste Zusammensetzung umfassen, wobei die erste Zusammensetzung das Folgende umfasst:

20 bis 80 Gewichtsprozent von einem Vinylchloridharz und
1 bis 40 Gewichtsprozent von einem epoxidierten Ester von Fettsäuren und einem monomeren Polyol, wobei der epoxidierte Ester eine Verbindung mit der Formel (I) ist:

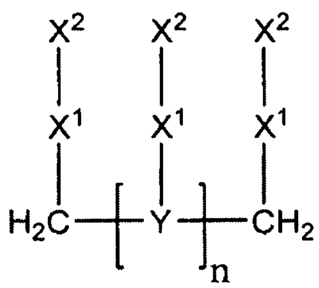

(I)

,

wobei n 0 bis 8 ist;

jeder Y unabhängig aus CH oder CHO ausgewählt ist;
2, 3 oder 4 der $X^1$ Oxy sind und jeder weitere $X^1$ Wasserstoff ist;
$X^2$ vorliegt, wenn $X^1$ Oxy ist;
2 oder 3 der $X^2$ unabhängig aus $C_m$-Acyl ausgewählt sind, wobei jedes m unabhängig aus 4 bis 28 ausgewählt ist, und jeder weitere $X^2$ Wasserstoff ist;
wobei (n + 2) + (die Summe von jedem m) 45 oder mehr beträgt; **dadurch gekennzeichnet, dass** die Verbindung mit der Formel (I) eine Menge an Doppelbindungen aufweist, die einer lodzahl von 2 oder weniger entspricht,
wobei die Kabelkonstruktion mindestens eine weitere Schichtkomponente umfasst, wobei die mindestens eine weitere Schichtkomponente eine zweite Zusammensetzung umfasst, die ein vernetztes Polyolefin umfasst.

2. Kabelkonstruktion nach Anspruch 1, wobei n 0 bis 2 ist;
2 der $X^1$ Oxy sind, 2 der $X^2$ jeweils unabhängig aus $C_m$-Acyl ausgewählt sind, wobei jedes m unabhängig aus 4 bis 28 ausgewählt ist, und jeder weitere $X^2$ Wasserstoff ist; und
wobei (n + 2) + (die Summe von jedem m) 58 bis 77 beträgt.

3. Kabelkonstruktion nach einem der Ansprüche 1 oder 2, wobei die Verbindung mit der Formel (I) einen epoxidierten Ester von Fettsäuren und ein monomeres Polyol umfasst, wobei die Fettsäuren 7 bis 10 Gewichts-prozent an gesättigten Fettsäuren und 82 bis 93 Gewichtsprozent an ungesättigten Fettsäuren umfassen.

4. Kabelkonstruktion nach einem der Ansprüche 1 bis 3, wobei die Verbindung mit der Formel (I) ein epoxidiertes Sojaöl (ESO) ist, das eine Menge an Doppelbindungen aufweist, die einer lodzahl von 1,3 oder weniger entspricht.

**5.** Kabelkonstruktion nach einem der Ansprüche 1 bis 4, wobei sich die Verbindung mit der Formel (I) von erneuerbaren Quellen ableitet.

**6.** Kabelkonstruktion nach einem der Ansprüche 1 bis 5, wobei die Kabelkonstruktion mindestens eine weitere Schichtkomponente umfasst, wobei die mindestens eine weitere Schichtkomponente eine zweite Zusammensetzung umfasst, die ein vernetztes Polypropylen oder ein vernetztes Polyethylen umfasst.

**7.** Kabelkonstruktion nach einem der Ansprüche 1 bis 6, wobei die Kabelkonstruktion mindestens eine weitere Schichtkomponente umfasst, wobei die mindestens eine weitere Schichtkomponente eine zweite Zusammensetzung umfasst, die ein vernetztes Polyethylen umfasst.

**8.** Kabelkonstruktion nach einem der Ansprüche 1 bis 7, wobei die Kabelkonstruktion ein Energiekabel ist.

**9.** Verfahren zum Herstellen von einer Kabelkonstruktion nach einem der Ansprüche 1 bis 8, wobei das Verfahren die folgenden Schritte umfasst: Aufbringen auf ein oder mehreren Kernen von ein oder mehreren Schichtelementen, wobei die Schichtelemente die erste Zusammensetzung wie in einem der Ansprüche 1 bis 5 definiert umfasst, Aufbringen auf ein oder mehreren Kernen von mindestens einer weiteren Schichtkomponente, wobei die mindestens eine weitere Schichtkomponente wie in einem der Ansprüche 1 bis 8 definiert ist, und Vernetzen von der aufgebrachten mindestens einen weiteren Schichtkomponente, wobei die mindestens eine weitere Schichtkomponente eine zweite Zusammensetzung umfasst, die ein Polyolefin umfasst, das hydrolysierbare silangruppe(n)-haltige Einheiten trägt, z.B. ein Polypropylen oder ein Polyethylen, wobei beide hydrolysierbare silangruppe(n)-haltige Einheiten tragen.

**10.** Vernetzte Kabelkonstruktion, erhältlich durch das Verfahren nach Anspruch 9.

## Revendications

**1.** Structure de câble comprenant un ou plusieurs éléments en couches, lesquels éléments en couches comprennent une première composition, dans laquelle la première composition comprend :

de 20 à 80 pour cent en poids d'une résine de chlorure de vinyle et
de 1 à 40 pour cent en poids d'un ester époxydé d'acides gras et d'un polyol monomère,
lequel ester époxydé est un composé de formule (I)

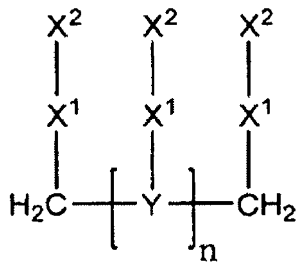

**(I)**

dans laquelle n vaut de 0 à 8 ;
chaque Y est indépendamment choisi parmi un CH ou un CHO ;
2, 3 ou 4 $X^1$ sont un oxy, et tout $X^1$ supplémentaire est un hydrogène ;
$X^2$ est présent lorsque $X^1$ est un oxy,
2 ou 3 $X^2$ sont indépendamment choisis parmi un $C_m$-acyle, dans laquelle chaque m est indépendamment choisi parmi 4 à 28, et tout $X^2$ supplémentaire est un hydrogène ;
où (n + 2) + (la somme de chaque m) est de 45 ou plus ; **caractérisé en ce que** le composé de formule (1) a une quantité de doubles liaisons correspondant à un indice d'iode de 2 ou moins,
dans laquelle la structure de câble comprend au moins un composant de couche supplémentaire, lequel au moins un composant de couche supplémentaire comprend une seconde composition comprenant une polyoléfine réticulée.

**2.** Structure de câble selon l'une quelconque de la revendication 1, dans laquelle n vaut de 0 à 2 ;

2 $X^1$ sont un oxy, 2 $X^2$ sont chacun indépendamment choisis parmi un $C_m$-acyle, dans laquelle chaque m est indépendamment choisi parmi 4 à 28, et tout $X^2$ supplémentaire est un hydrogène ; et
où (n + 2) + (la somme de chaque m) est de 58 à 77.

**3.** Structure de câble selon l'une quelconque de la revendication 1 ou 2, dans laquelle le composé de formule (I) comprend un ester époxydé d'acides gras et un polyol monomère, dans laquelle lesdits acides gras comprennent de 7 à 18 pour cent en poids d'acides gras saturés et de 82 à 93 pour cent en poids d'acides gras insaturés.

**4.** Structure de câble selon l'une quelconque de la revendication 1 à 3, dans laquelle le composé de formule (I) est une huile de soja époxydée (HSE) ayant une quantité de doubles liaisons correspondant à un indice d'iode de 1,3 ou moins.

**5.** Structure de câble selon l'une quelconque des revendications 1 à 4, dans laquelle le composé de formule (I) est dérivé de sources renouvelables.

**6.** Structure de câble selon l'une quelconque des revendications 1 à 5, dans laquelle la structure de câble comprend au moins un composant de couche supplémentaire, lequel au moins un composant de couche supplémentaire comprend une seconde composition comprenant un polypropylène réticulé ou un polyéthylène réticulé.

**7.** Structure de câble selon l'une quelconque des revendications 1 à 6, dans laquelle la structure de câble comprend au moins un composant de couche supplémentaire, lequel au moins un composant de couche supplémentaire comprend une seconde composition comprenant un polyéthylène réticulé.

**8.** Structure de câble selon l'une quelconque des revendications 1 à 7, dans laquelle la structure de câble est un câble d'alimentation.

**9.** Procédé de production d'une structure de câble selon l'une quelconque des revendications 1 à 8, selon lequel le procédé comprend l'étape d'application d'un ou plusieurs éléments en couches sur une ou plusieurs âmes, dans lequel les éléments en couches comprennent la première composition selon l'une quelconque des revendications 1 à 5.
l'application sur une ou plusieurs âmes d'au moins un composant de couche supplémentaire, dans lequel ledit au moins un composant de couche supplémentaire est selon l'une quelconque des revendications 1 à 8, et
la réticulation de l'au moins un composant de couche supplémentaire appliqué, dans lequel ledit au moins un composant de couche supplémentaire comprend une seconde composition comprenant une polyoléfine portant un (des) groupe(s) silane hydrolysable(s) contenant des unités, par exemple un polypropylène ou un polyéthylène, portant tous deux un (des) groupe(s) silane hydrolysable(s) contenant des unités.

**10.** Structure de câble réticulée pouvant être obtenue par le procédé selon l'une quelconque de la revendication 9.

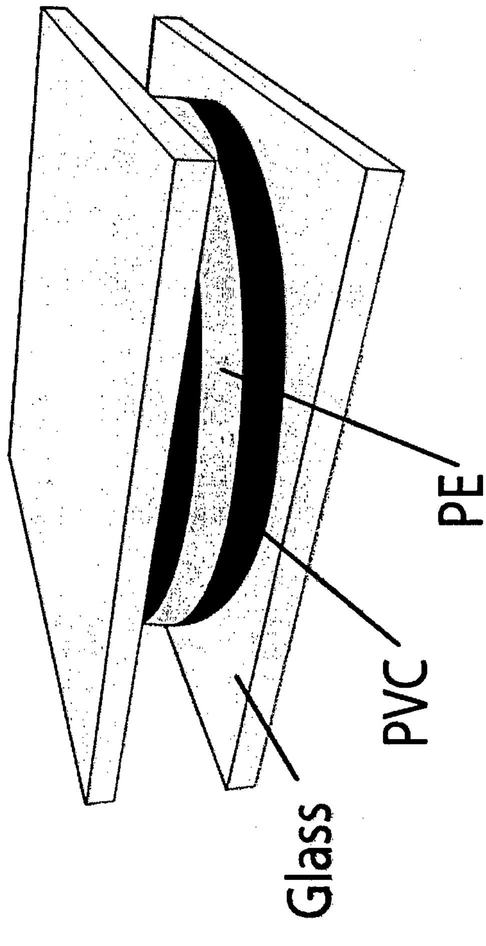


Fig. 1

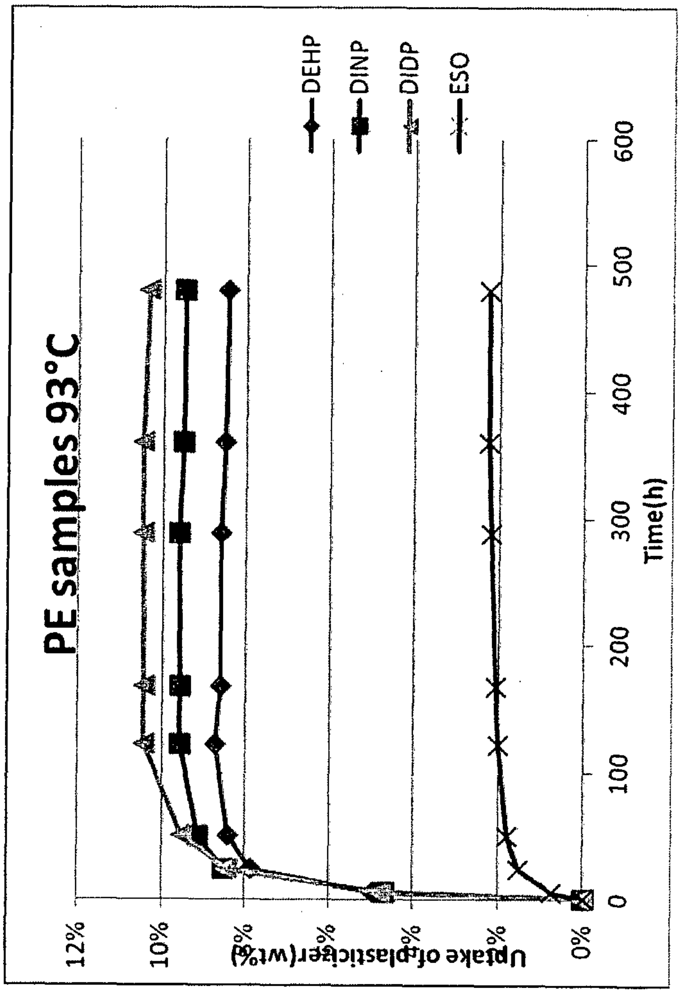
PE samples 93°C
12%
10%
0%
Uptake of plasticizer (wt%)
0
100
200
300
400
500
600
Time(h)
DEHP
DINP
DIDP
ESO

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110272174 A
- US 20100010127 A
- EP 2070977 A
- EP 1512711 A
- US 3646115 A
- US 4117195 A
- EP 0193317 A
- US 4857600 A
- US 5575965 A